# EUROPEAN PATENT SPECIFICATION

(11) **EP 2 166 713 B1**
(45) Date of publication and mention of the grant of the patent: **04.01.2017**
(21) Application number: 08783979.1
(22) Date of filing: 14.08.2008
(51) Int. Cl.: H04W 24/10, H04W 48/08, H04W 88/00, H04W 88/08, H04W 16/32

(54) **A METHOD AND USER EQUIPMENT FOR READING CONTROL CHANNELS**
VERFAHREN UND BENUTZERVORRICHTUNG ZUR AUSLESUNG VON STEUERKANÄLEN
PROCÉDÉ ET ÉQUIPEMENT UTILISATEUR POUR LIRE DES CANAUX DE COMMANDE

(30) Priority: 17.08.2007 CN 200710146737; 04.05.2008 CN 200810094715
(43) Date of publication of application: 24.03.2010
(73) Proprietor: Huawei Technologies Co., Ltd., Longgang District Shenzhen, Guangdong 518129 (CN)
(72) Inventor: YU, Yinghui, Guangdong 518129 (CN)
(74) Representative: Isarpatent
(86) International application number: PCT/CN2008/071988
(87) International publication number: WO 2009/024065

(56) References cited:
- EP-A1- 1 146 761
- WO-A1-2006/102918
- WO-A2-01/43462
- CN-A- 1 164 950
- CN-A- 1 378 357
- CN-A- 1 747 344
- CN-A- 1 842 205
- US-A1- 2004 252 656

## Description

### Field of the Invention

The present invention relates to a communication technology, and in particular, to a method and user equipment (UE) for measuring cells and reading control channels.

### Background of the Invention

When a UE is residing in a network, the UE monitors neighbor cells continuously, and identifies and measures the monitored neighbor cells. The UE may also read the offsets of the identified cells through control channels, for example, a broadcast control channel and a multimedia broadcast multicast service (MBMS) control channel. The UE sorts the identified cells according to the measurement results and offsets of the neighbor cells, and uses the top cell as the reselected cell. The measurement results may include measurement strength, measurement quality, and interference strength. The offsets of the cells include: cell individual offset, one-to-one offset between cells and offset of the MBMS preferred frequency layer. The cell individual offset is the offset between one cell and the rest of cells. The one-to-one offset between cells is a special offset configured between two cells. The one-to-one offset between a same serving cell and its neighbor cells may vary. The offset of the MBMS preferred frequency layer is a one-to-many offset between one frequency layer and other frequency layers.

US 2004/0252656 A1 relates to techniques for inter-frequency neighbour list searching. In one embodiment, a searcher is deployed to search a PN space with a first set of search parameters and to return search results. A subset of those results is selected, along with a previously saved search result, to form a set of PN locations for a second search. The second search is performed on a window around each of the PN locations, using a second set of search parameters. The maximum peak from the second search is saved for use in future iterations.

WO 2006/102918 A1 relates to a radio-access method for mobile-radio networks. The mobile-radio network includes radio base stations providing radio coverage to the users of the network via antenna elements, wherein the antenna elements (50) are equipped with at least one first communication channel and at least one second communication channel. The first communication channel provides a first layer of individual microcell radio coverage for the antenna elements. The second communication channel is made common to groups of the antenna elements and provides a second layer of virtual macrocell radio coverage, wherein the coverage of each virtual macrocell aggregates the microcell radio coverage of the antenna elements included in the respective group.

EP 1146761 A1 relates to a channel identifier allocation method. The method includes the step of assigning channel identifiers belonging to the same group to sectors of the same base station, and the step of sending from the base station to the visiting mobile station a notification of any one of the channel identifiers assigned to the sectors of one of neighboring base stations.

### Summary of the Invention

Embodiments of the present invention provide a method and UE for measuring cells and reading control channels. In the following, several aspects of the invention are listed.

According to the first aspect, a method for reading broadcast channels is provided:
scanning a physical scramble of a cell, and determining whether the cell is a macro cell according to the scanned physical scramble; when no,
judging whether the scanned physical scramble of the cell is a physical scramble in a pre-configured cell support list, wherein the pre-configured cell support list comprises physical scrambles of a micro cell that can be identified by a UE and an upper-layer ID of the micro cell that can be identified by the UE; when yes,
reading broadcast channel information of the cell ;
judging whether an upper-layer ID in the read broadcast channel information is an upper-layer ID in the pre-configured cell support list; when yes,
determining the cell is a micro cell that can be identified by the UE.

According to the second aspect, a UE is provided:
a first processing module, adapted to scan a physical scramble of a cell and determine whether the cell is a micro cell according to the scanned physical scramble;
a second processing module, adapted to judge whether the scanned physical scramble of the cell is a physical scramble in a pre-configured cell support list when the cell is not a macro cell, wherein the pre-configured cell support list comprises physical scrambles of a micro cell that can be identified by the UE and an upper-layer ID of the micro cell that can be identified by the UE;
a third processing module, adapted to read broadcast channel information of the cell, when the scanned physical scramble of the cell is a physical scramble in the pre-configured cell support list;
a fourth processing module, adapted to judge whether an upper-layer ID in the read broadcast channel information is an upper-layer ID in the pre-configured cell support list; and,
a fifth processing module, adapted to determine the cell is a micro cell that can be identified by the UE when the upper-layer ID in the read broadcast channel information is an upper-layer ID in the pre-configured cell support list.

According to the third aspect, a system for reading broadcast channels is provided:
a NodeB, configured to broadcast public information to UEs;
a UE according to the second aspect.

According to the forth aspect, a computer program product is provided, characterized by comprising computer program code, which, when executed by a computer unit, will cause the computer unit to perform the steps of the method according to the first aspect.

It can be seen from the above description that, one of the preceding method and UE provided in embodiments of the present invention can prevent the UE from measuring too many cells and thus save system resources.

### Brief Description of the Drawings

FIG. 1 is a flowchart of a method for measuring cells in a first embodiment of the present invention;
FIG. 2 is a flowchart of a method for measuring cells in a second embodiment of the present invention;
FIG. 3 is a flowchart of a method for reading control channels in a third embodiment of the present invention;
FIG. 4 is a flowchart of a method for reading control channels in a fourth embodiment of the present invention;
FIG. 5 is a flowchart of a method for measuring cells and reading control channels in a fifth embodiment of the present invention;
FIG. 6 is a flowchart of a method for measuring cells and reading control channels in a sixth embodiment of the present invention;
FIG. 7 is a flowchart of a method for measuring cells and reading control channels in a seventh embodiment of the present invention;
FIG. 8 is a flowchart of a method for reading control channels in an eighth embodiment of the present invention;
FIG. 9 is a flowchart of a method for reading control channels in a ninth embodiment of the present invention;
FIG. 10 is a flowchart of a method for reading control channels in a tenth embodiment of the present invention;
FIG. 11 shows a structure of a UE in an eleventh embodiment of the present invention;
FIG. 12 shows a structure of a UE in a twelfth embodiment of the present invention;
FIG. 13 shows a structure of a UE in an thirteenth embodiment of the present invention; and
FIG. 14 shows a structure of a UE in a fourteenth embodiment of the present invention.

### Detailed Description of the Embodiments

A first embodiment and a second embodiment of the present invention provide a method for measuring cells. The method includes: scanning a frequency point; judging whether the scanned frequency point meets a pre-configured measurement condition; if the scanned frequency point meets the pre-configured measurement condition, identifying a cell corresponding to the frequency point, and measuring the signal level of the cell. With the technical solution provided in the embodiments, the number of cells measured by the UE is limited, which prevents the UE from measuring too many cells.

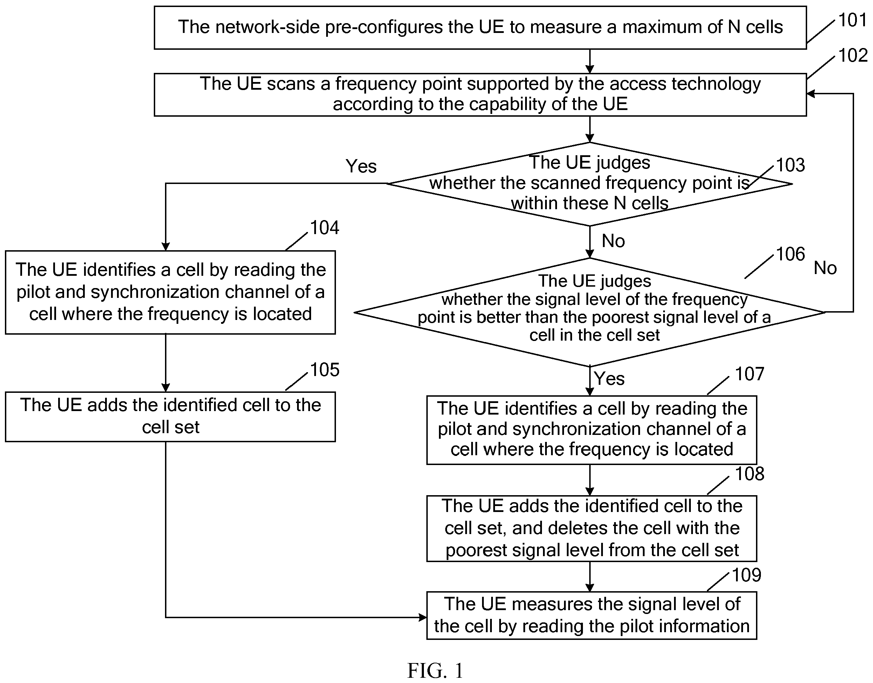

FIG. 1 is a flowchart of a method for measuring cells in a first embodiment of the present invention. The method includes:
Step 101: The network pre-configures the UE to measure a maximum of N cells.

The N cells in this step are determined by the operator according to experience, and configured in the network.

Step 102: The UE scans a frequency point supported by the access technology according to the capability of the UE.

In a network system, the protocol specifies a frequency band for operation. The UE scans a frequency point within the frequency band according to the capability of the UE.

Step 103: The UE judges whether the scanned frequency point is within these N cells; if the scanned frequency point is within these N cells, the process proceeds to step 104; otherwise, the process proceeds to step 106.

Step 104: The UE identifies a cell by reading the pilot and synchronization channel of a cell where the frequency point is located.

Step 105: The UE adds the identified cell to a cell set. Then, the process proceeds to step 109.

The cell set is a set of a pre-configured number of cells, and includes a maximum of N cells.

Before this step, the UE may also predetermine a threshold. This step of adding the identified cell to the cell set may be executed only when the signal level of the frequency point is higher than the pre-configured threshold.

Step 106: The UE judges whether the signal level of the scanned frequency point is higher than the poorest signal level of a cell in the cell set. If the signal level of the scanned frequency point is higher than the poorest signal level of a cell in the cell set, the process proceeds to step 107; otherwise, the process goes back to step 102.

The signal level may be represented by signal strength, signal quality or interference strength. The greater the signal strength is, the higher the signal level will be; or the better the signal quality is, the higher the signal level will be; or the less interference strength is, the higher the signal level will be. The process proceeds to step 107 when the signal strength of the scanned frequency point is greater than the littlest signal strength of a cell in the cell set, or when the signal quality of the scanned frequency point is better than the poorest signal quality of a cell in the cell set, or when the interference strength of the scanned frequency point is less than the littlest interface strength of a cell in the cell set.

Step 107: The UE identifies a cell by reading the pilot and synchronization channel of a cell where the frequency point is located.

Step 108: The UE adds the identified cell in step 107 to the cell set, and deletes the cell with the poorest signal level from the cell set.

Step 109: The UE measures the signal level of the cell by reading the pilot information.

In the foregoing embodiment of the present invention, the UE may not need to judge whether the scanned frequency point is within the N frequency points, which does not affect the implementation of the present invention. For example, a time segment may be pre-configured; when the time segment expires, the UE does not judge whether the scanned frequency point is within the N frequency points; instead, the UE judges whether the signal level of the scanned frequency point is higher than the lowest signal level of a cell in the cell set.

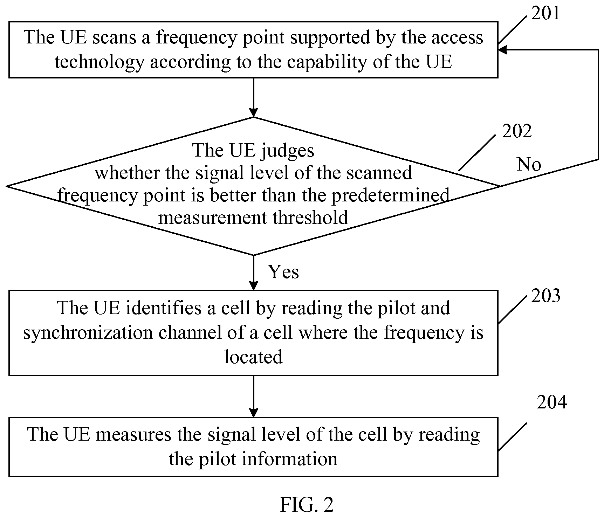

FIG. 2 is a flowchart of a method for measuring cells in a second embodiment of the present invention. The method includes:
Step 201: The UE scans a frequency point supported by the access technology according to the capability of the UE.
Step 202: The UE judges whether the signal level of the scanned frequency point is higher than a pre-configured measurement threshold. If the signal level of the scanned frequency point is higher than the pre-configured measurement threshold, the process proceeds to step 203; otherwise, the process goes back to step 201.

If the signal level of the scanned frequency point is not higher than the pre-configured measurement threshold, the process goes back to step 201; that is, the UE continues to scan other frequency points.

When the signal level is represented by the signal strength, the UE judges whether the signal strength of the scanned frequency point is greater than the pre-configured signal strength threshold; if the signal strength of the scanned frequency point is greater than the pre-configured signal strength threshold, the process proceeds to step 203. When the signal level is represented by the signal quality, the UE judges whether the signal quality of the scanned frequency point is better than the pre-configured signal quality threshold; if the signal quality of the scanned frequency point is better than the pre-configured signal quality threshold, the process proceeds to step 203. When the signal level is represented by the interference strength, the UE judges whether the interference strength of the scanned frequency point is less than the pre-configured interference strength threshold; if the interference strength of the scanned frequency point is less than the pre-configured interference strength threshold, the process proceeds to step 203.

Step 203: The UE identifies a cell by reading the pilot and synchronization channel of a cell where the frequency point is located.

Step 204: The UE measures the signal level of the cell by reading the pilot information.

In this embodiment of the present invention, when the UE determines that the signal levels of all scanned frequency points do not reach the pre-configured measurement threshold, the UE changes the pre-configured measurement threshold, reduces the signal strength threshold and signal quality threshold, and increases the interference strength threshold. Then, the process goes back to step 202.

In this embodiment, the UE judges whether the signal level of the scanned frequency point meets the pre-configured measurement condition. The UE measures the signal level of the cell corresponding to the frequency point only when the signal level of the scanned frequency point meets the pre-configured measurement condition. Thus, the number of cells measured by the UE is limited, which prevents the UE from measuring too many cells.

A method for reading control channels in an embodiment of the present invention includes: judging whether a cell meets a pre-configured read condition; if the cell meets the pre-configured read condition, reading the control channel information of the cell. With the technical solution provided in this embodiment of the present invention, the number of cells read by the UE is limited.

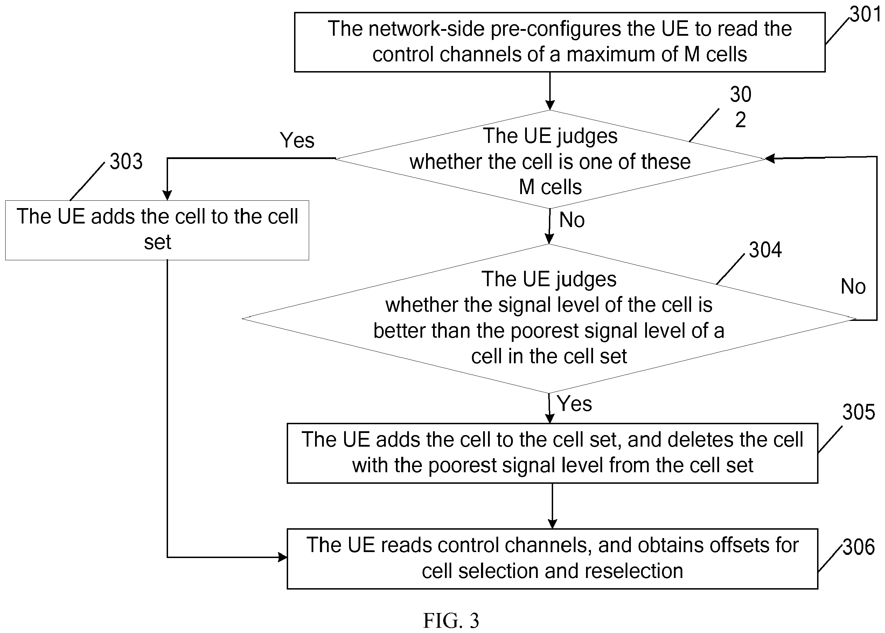

FIG. 3 is a flowchart of a method for reading control channels in a third embodiment of the present invention. The method includes:
Step 301: The network-side pre-configures the UE to read control channels of M cells at most.
Step 302: The UE judges whether a cell is within the M cells; if the cell is within the M cells, the process proceeds to step 303; otherwise, the process proceeds to step 304.
Step 303: The UE adds the cell to the cell set. Then, the process proceeds to step 306.

In this step, the UE may also predetermine a threshold. The UE adds the cell to the cell set only when the signal level of the identified cell is higher than the pre-configured threshold so as to establish an initial cell set.

Step 304: The UE judges whether the signal level of the cell is higher than the lowest signal level of a cell in the cell set. If the signal level of the cell is higher than the lowest signal level of the cell in the cell set, the process proceeds to step 305; otherwise, the process goes back to step 302.

In this step, if the signal level of the cell is not higher than the lowest signal level of a cell in the cell set, the process goes back to step 302; that is, the UE continues to judge other cells.

The UE may judge whether the signal level of the cell is higher than the lowest signal level of a cell in the cell set in the following modes: when the signal level of the cell is represented by the signal strength of the cell, the UE judges whether the signal strength of the cell is greater than the littlest signal strength of a cell in the cell set; when the signal level of the cell is represented by the signal quality of the cell, the UE judges whether the signal quality of the cell is better than the poorest signal quality of a cell in the cell set; when the signal level of the cell is represented by the interference strength of the cell, the UE judges whether the interference strength of the cell is less than the littlest interference strength of a cell in the cell set.

Step 305: The UE adds the cell to the cell set, and deletes the cell with the lowest signal level from the cell set.

Step 306: The UE reads control channels, and obtains all the offsets for cell selection and reselection in the cell set.

The control channels in this step include a broadcast control channel (BCCH) and an MBMS point-to-multipoint control channel (MCCH). The BCCH is used by a NodeB to broadcast public information to all the UEs. The system information blocks of the public information include cell selection and reselection parameters, which include: one-to-one offset between cells and cell individual offset of a cell. The information broadcasted in the MCCH includes MBMS related control messages and an offset of the MBMS preferred frequency layer, which is a one-to-many offset between one frequency layer and other frequency layers.

The offsets of the cell in this step include: one-to-one offset between cells, cell individual offset, and offset of the MBMS preferred frequency layer.

In this step, the process of obtaining the offsets of the cell by the UE includes: judging whether a value tag that is used to indicate whether the offsets are changed in the information broadcasted in the MCCH and the BCCH of the cell indicates that the offsets is changed; if the value tag indicates that the offsets is changed, decoding the offsets in the information broadcasted in the MCCH and the BCCH, and obtaining the offsets of the cell; otherwise, using the read offsets of the cell, without decoding the offsets in the broadcasted information.

In a third embodiment of the present invention, the UE may not need to judge whether the cell is within the M cells, which does not affect the implementation of the present invention. For example, a time segment may be pre-configured; after the time segment expires, the UE does not judge whether the cell is within the M cells; instead, the UE judges whether the signal level of the cell is higher than the lowest signal level of a cell in the cell set.

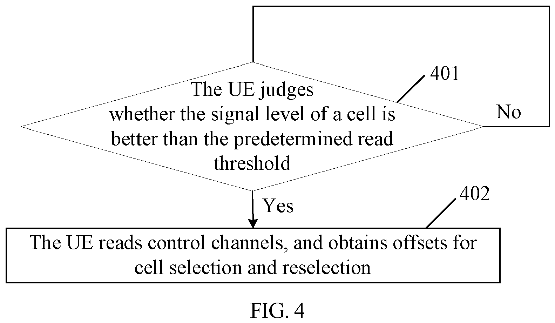

FIG. 4 is a flowchart of a method for reading control channels in a fourth embodiment of the present invention. The method includes:
Step 401: The UE judges whether the signal level of a cell is higher than a pre-configured read threshold. If the signal level of the cell is higher than the pre-configured read threshold, the process proceeds to step 402; otherwise, the process goes back to step 401 again.

In this step, if the signal level of the cell is not higher than the pre-configured read threshold, the process goes back to step 401 again; that is, the UE continues to judge whether the signal levels of other cells are higher than the pre-configured read threshold.

In this step, the UE may judge whether the signal level of the cell is higher than the pre-configured read threshold in the following modes: when the signal level of the cell is represented by the signal strength, the UE judges whether the signal strength of the cell is greater than the pre-configured signal strength threshold; when the signal level of the cell is represented by the signal quality, the UE judges whether the signal quality of the cell is better than the pre-configured signal quality threshold; when the signal level of the cell is represented by the interference strength, the UE judges whether the interference strength of the cell is less than the pre-configured interference strength threshold.

Step 402: The UE reads control channels, and obtains the offsets for cell selection and reselection.

In this step, the control channels include the BCCH and the MCCH. The BCCH is used by the NodeB to broadcast public information to all the UEs, where the public information includes offsets for cell selection and reselection: one-to-one offset between cells and cell individual offset. The information broadcasted in the MCCH includes the offset of the MBMS preferred frequency layer. The offsets of the cell in this step include: one-to-one offset between cells, cell individual offset, and offset of the MBMS preferred frequency layer.

In this step, the process of obtaining the offsets of the cell by the UE includes: judging whether a value tag that is used to indicate whether the offsets are changed in the information broadcasted in the MCCH and the BCCH of the cell indicates that the offsets are changed; if the value tag indicates that the offsets are changed, decoding the offsets in the information broadcasted in the MCCH and the BCCH, and obtaining the offsets of the cell; otherwise, using the previously read offsets of the cell, without decoding the offsets in the broadcasted information.

In a fourth embodiment of the present invention, when the UE determines that the signal levels of cells do not reach the pre-configured read threshold, the UE changes the pre-configured read threshold, reduces the signal strength threshold and signal quality threshold, and increases the interference strength threshold. Then, the process proceeds to step 402 again.

In this embodiment, the UE judges whether the signal level of the cell is higher than the pre-configured read threshold. The UE reads control channels only when the signal level of the cell is higher than the pre-configured read threshold. Thus, the number of cells read by the UE is limited; the time needed by the UE to read the control channels of the cell is reduced; and the mobility processing time of the UE is saved. In addition, the UE reads only control channels of cells whose signal levels are higher than the pre-configured read threshold, where these cells have high signal levels, so that the decoding error rate is reduced when the UE reads the control channels to obtain the parameters of the cells.

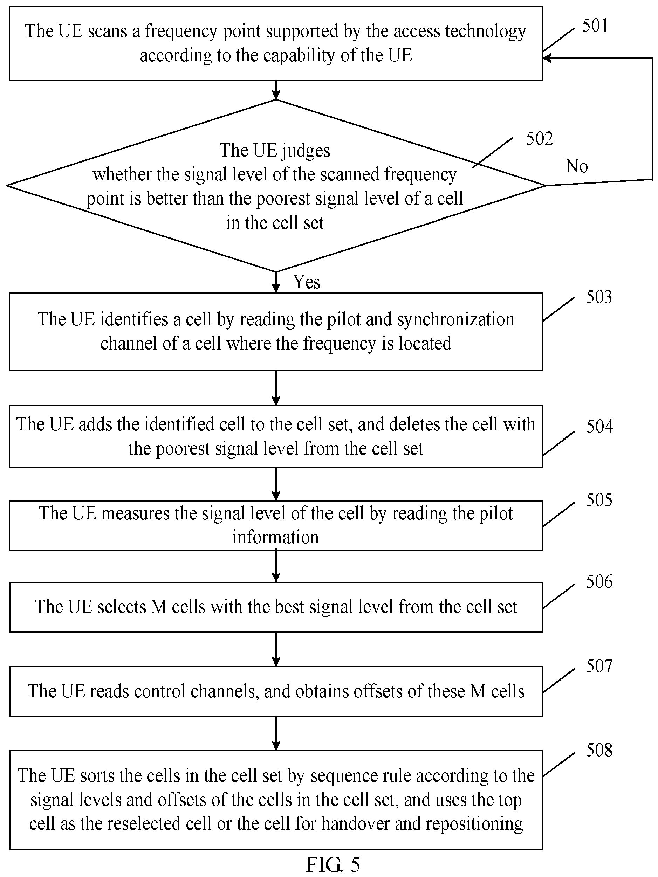

FIG. 5 is a flowchart of a method for measuring cells and reading control channels in a fifth embodiment of the present invention. The method includes:
Step 501: The UE scans a frequency point supported by the access technology according to the capability of the UE.
Step 502: The UE judges whether the signal level of the scanned frequency point is higher than the lowest signal level of a cell in the cell set. If the signal level of the scanned frequency point is higher than the lowest signal level of the cell in the cell set, the process proceeds to step 503; otherwise, the process goes back to step 501.

In this step, when the signal strength of the scanned frequency point is greater than the littlest signal strength of a cell in the cell set, the process proceeds to step 503; or when the signal quality of the scanned frequency point is better than the poorest signal quality of a cell in the cell set, the process proceeds to step 503; or when the interference strength of the scanned frequency point is less than the littlest interference strength of a cell in the cell set, the process proceeds to step 503.

Step 503: The UE identifies a cell by reading the pilot and synchronization channel of a cell where the frequency is located.

Step 504: The UE adds the identified cell in the preceding step to the cell set, and deletes the cell with the poorest signal level from the cell set.

Step 505: The UE measures the signal level of the cell by reading the pilot information.

Step 506: The UE selects M cells with the best signal level in the cell set.

Step 507: The UE reads control channels and obtains offsets of these M cells.

In this step, the control channels include the BCCH and the MCCH, where the BCCH is used by the NodeB to broadcast public information to all the UEs. The system information blocks of the public information includes cell selection and reselection parameters: one-to-one offset between cells and cell individual offset. The information broadcasted in the MCCH includes MBMS-related control messages and the offset of the MBMS preferred frequency layer, which is a one-to-many offset between one frequency layer and other frequency layers.

The offsets of the cell in this step include: one-to-one offset between cells, individual offset of a cell, and offset of the MBMS preferred frequency layer.

In this step, the process of obtaining the offsets of the cell includes: for a cell that is added in step 504, decoding the offsets in the information broadcasted in the MCCH and the BCCH; for a cell that already exists in the cell set, judging whether a value tag that is used to indicate whether the offsets are changed in the information broadcasted in the MCCH and the BCCH of the cell indicates that the offsets are changed; if the value tag indicates that the offsets are changed, decoding the offsets in the information broadcasted in the MCCH and the BCCH, and obtaining the offsets of the cell; otherwise, using the read offsets of the cell, without decoding the offsets in the broadcasted information.

Step 508: The UE sorts the cells in the cell set by sequence rule according to the signal levels and offsets of the cells in the cell set, and uses the top cell as the reselected cell or the cell for handover or repositioning.

In a fifth embodiment of the present invention, the network-side pre-configures the UE to measure a maximum of N cells and to read a maximum of M cells. Then, the UE scans N frequency points, identifies N cells by reading the pilots and synchronization channels of cells where the N frequency points are located, and uses these N cells as the initial cell set. The UE may also predetermine a threshold. The UE adds a cell corresponding to the frequency point to the cell set only when the signal level of the frequency point is higher than the threshold so as to establish the initial cell set.

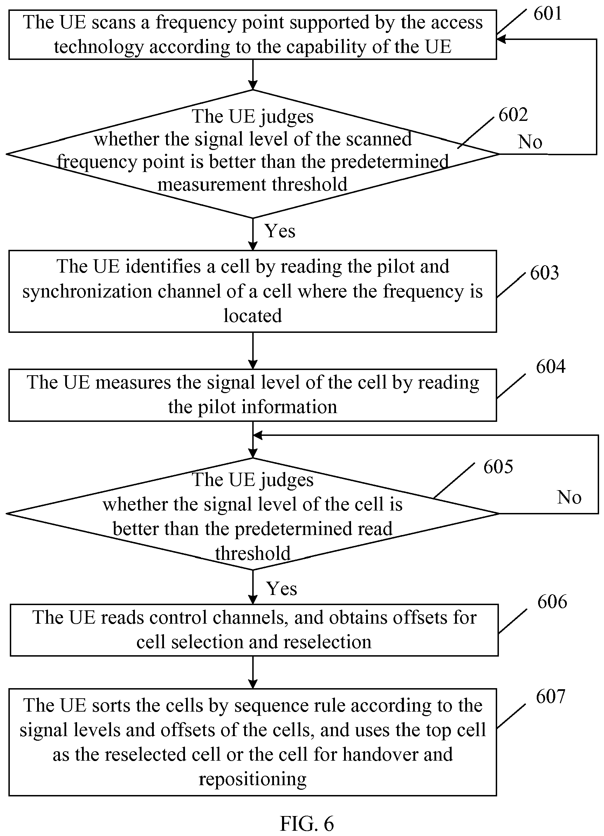

FIG. 6 is a flowchart of a method for measuring cells and reading control channels in a sixth embodiment of the present invention. The method includes:
Step 601: The UE scans all frequency points supported by the access technology according to the capability of the UE.
Step 602: The UE judges whether the signal levels of the scanned frequency points are higher than the pre-configured measurement threshold. If the signal levels of the scanned frequency points are higher than the pre-configured measurement threshold, the process proceeds to step 603; otherwise, the process goes back to step 601.

In this step, when the signal level is represented by the signal strength, the UE judges whether the signal strength of the scanned frequency points is greater than the pre-configured first signal strength threshold; if the signal strength of the scanned frequency points is greater than the pre-configured first signal strength threshold, the process proceeds to step 603. When the signal level is represented by the signal quality, the UE judges whether the signal quality of the scanned frequency points is better than the pre-configured first signal quality threshold; if the signal quality of the scanned frequency points is better than the pre-configured first signal quality threshold, the process proceeds to step 603. When the signal level is represented by the interference strength, the UE judges whether the interference strength of the scanned frequency points is less than the pre-configured first interference strength threshold; if the interference strength of the scanned frequency points is less than the pre-configured first interference strength threshold, the process proceeds to step 603.

Step 603: The UE identifies cells by reading the pilots and synchronization channels of cells where the frequency is located.

Step 604: The UE measures the signal levels of the cells by reading the pilot information.

Step 605: The UE judges whether the signal levels of the cells in the preceding step are higher than the pre-configured read threshold. If the signal levels of the cells in the preceding step are higher than the pre-configured read threshold, the process proceeds to step 606; otherwise, the process proceeds to step 605 again.

In this step, the UE judges whether the signal levels of the cells in the preceding step are higher than the pre-configured read threshold in the following modes: when the signal level is represented by the signal strength, the UE judges whether the signal strength of the cells is greater than the pre-configured second signal strength threshold; when the signal level is represented by the signal quality, the UE judges whether the signal quality of the cells is better than the pre-configured second signal quality threshold; when the signal level is represented by the interference strength, the UE judges whether the interference strength of the cells is less than the pre-configured second interference strength threshold.

Step 606: The UE reads control channels and obtains offsets for cell selection and reselection.

In this step, the control channels include the BCCH and the MCCH. The BCCH is used by the NodeB to broadcast public information to all the UEs, where the public information includes offsets for cell selection and reselection: one-to-one offset between cells and cell individual offset. The information broadcasted in the MCCH includes the offset of the MBMS preferred frequency layer, which is a one-to-many offset between one frequency layer and other frequency layers. The offsets of the cells in this step include: one-to-one offset between cells, cell individual offset, and offset of the MBMS preferred frequency layer.

Step 607: The UE sorts the cells by sequence rule according to the signal levels and offsets of the cells, and uses the top cell as the reselected cell or the cell for handover and repositioning.

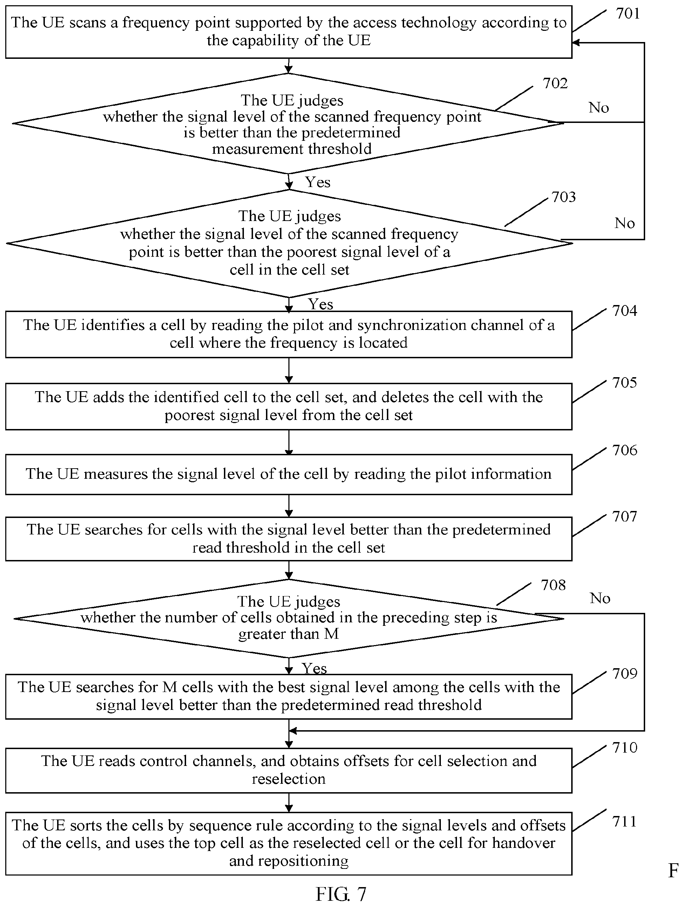

FIG. 7 is a flowchart of a method for measuring cells and reading control channels in a seventh embodiment of the present invention. The method includes:
Step 701: The UE scans a frequency point supported by the access technology according to the capability of the UE.
Step 702: The UE judges whether the signal level of the scanned frequency point is higher than the pre-configured measurement threshold. If the signal level of the scanned frequency point is higher than the pre-configured measurement threshold, the process proceeds to step 703; otherwise, the process goes back to step 701.

In this step, when the signal level is represented by the signal strength, the UE judges whether the signal strength of the scanned frequency point is greater than the pre-configured first signal strength threshold; if the signal strength of the scanned frequency point is greater than the pre-configured first signal strength threshold, the process proceeds to step 703. When the signal level is represented by the signal quality, the UE judges whether the signal quality of the scanned frequency points is better than the pre-configured first signal quality threshold; if the signal quality of the scanned frequency points is better than the pre-configured first signal quality threshold, the process proceeds to step 703. When the signal level is represented by the interference strength, the UE judges whether the interference strength of the scanned frequency point is less than the pre-configured first interference strength threshold; if the interference strength of the scanned frequency point is less than the pre-configured first interference strength threshold, the process proceeds to step 703.

Step 703: The UE judges whether the signal level of the scanned frequency point is higher than the poorest signal level of a cell in the cell set. If the signal level of the scanned frequency point is higher than the poorest signal level of the cell in the cell set, the process proceeds to step 704; otherwise, the process goes back to step 701.

In this step, when the signal strength of the scanned frequency point is greater than the littlest signal strength of a cell in the cell set, the process proceeds to step 704; or when the signal quality of the scanned frequency point is better than the poorest signal quality of a cell in the cell set, the process proceeds to step 704; or when the interference strength of the scanned frequency point is less than the littlest interference strength of a cell in the cell set, the process proceeds to step 704.

Step 704: The UE identifies a cell by reading the pilot and synchronization channel of a cell where the frequency is located.

Step 705: The UE adds the identified cell in the preceding step to the cell set, and deletes the cell with the poorest signal level from the cell set.

Step 706: The UE measures the signal level of the cell by reading the pilot information.

Step 707: The UE searches for cells with the signal level higher than the pre-configured read threshold in the cell set.

In this step, the UE searches for cells with the signal level higher than the pre-configured read threshold in the cell set in the following modes: when the signal level is represented by the signal strength, the UE searches for cells with the signal strength greater than the pre-configured second signal strength threshold; when the signal level is represented by the signal quality, the UE searches for cells with the signal quality better than the pre-configured second signal quality threshold; when the signal level is represented by the interference strength, the UE searches for cells with the interference strength less than the pre-configured second interference strength threshold.

Step 708: The UE judges whether the number of cells with the signal level higher than the pre-configured read threshold is greater than M. If the number of cells with the signal level higher than the pre-configured read threshold is greater than M, the process proceeds to step 709; otherwise, the process goes to step 710.

Step 709: The UE searches for M cells with the best signal level in the cells with the signal level higher than the pre-configured read threshold.

Step 710: The UE reads control channels and obtains offsets for cell selection and reselection.

In this step, the control channels include the BCCH and the MCCH. The BCCH is used by the NodeB to broadcast public information to all the UEs, where the public information includes cell selection and reselection parameters: one-to-one offset between cells and cell individual offset. The information broadcasted in the MCCH includes the offset of the MBMS preferred frequency layer, which is a one-to-many offset between one frequency layer and other frequency layers.

The offsets of the cell in this step include: one-to-one offset between cells, cell individual offset, and offset of the MBMS preferred frequency layer.

In this step, the process of obtaining the offsets of the cells includes: for a cell that is added in step 705, decoding the offsets in the information broadcasted in the MCCH and the BCCH; for a cell that already exists in the cell set, judging whether a value tag that is used to indicate whether the offsets are changed in the information broadcasted in the MCCH and the BCCH of the cell indicates that the offsets are changed; if the valued tag indicates that the offsets are changed, decoding the offsets in the information broadcasted in the MCCH and the BCCH, and obtaining the offsets of the cell; otherwise, using the read offsets of the cell, without decoding the offsets in the broadcasted information.

Step 711: The UE sorts the cells by sequence rule according to the signal levels and offsets of the cells, and uses the top cell as the reselected cell or the cell for handover and repositioning.

In a seventh embodiment of the present invention, the network pre-configures the UE to measure a maximum of N cells and to read a maximum of M cells; the UE scans N frequency points, identifies N cells by reading the pilots and synchronization channels of cells where the N frequency points are located, and uses these N cells as the initial cell set. The UE may also predetermine a threshold. The UE adds a cell corresponding to the frequency point to the cell set only when the signal level of the frequency point is higher than the threshold so as to establish the initial cell set.

In the preceding fifth embodiment to the seventh embodiment, the UE judges whether the signal level of a scanned frequency point meets the pre-configured measurement condition; the UE measures the signal level of a cell corresponding to the frequency point only when the signal level of the scanned frequency point meets the pre-configured measurement condition. Thus, the number of cells measured by the UE is limited. In addition, the UE judges whether the signal level of a measured cell meets the pre-configured read condition; the UE reads control channels only when the signal level of the cell meets the read condition. Thus, the number of cells read by the UE is limited; the time needed by the UE to read the control channels is reduced; and the cell reselection time is decreased.

For better understanding of the eighth embodiment and the ninth embodiment of the present invention, the following describes the reuse of physical scrambles.

In a scenario where a macro cell and a micro cell (a home NodeB or a closed subscriber group (CSG) cell) overlap, the physical scrambles may be reused due to a large number of micro cells. For example, if a macro cell (the current serving cell of the UE) is a neighbor cell of more than 1,000 micro cells, more than 1,000 physical scrambles are needed to identify the neighbor cells of the UE theoretically. However, there are only 512 physical scrambles in a wideband code division multiple access (WCDMA) system and 504 physical scrambles in a long time evolution (LTE) system. As a result, the physical scrambles are reused; that is, one physical scramble may be used to identify multiple cells. Thus, the physical scrambles cannot be used to identify the neighbor cells one by one. Because the number of macro cells around a macro cell (the current serving cell of the UE) is always limited, the physical scrambles are reused due to a large number of micro cells.

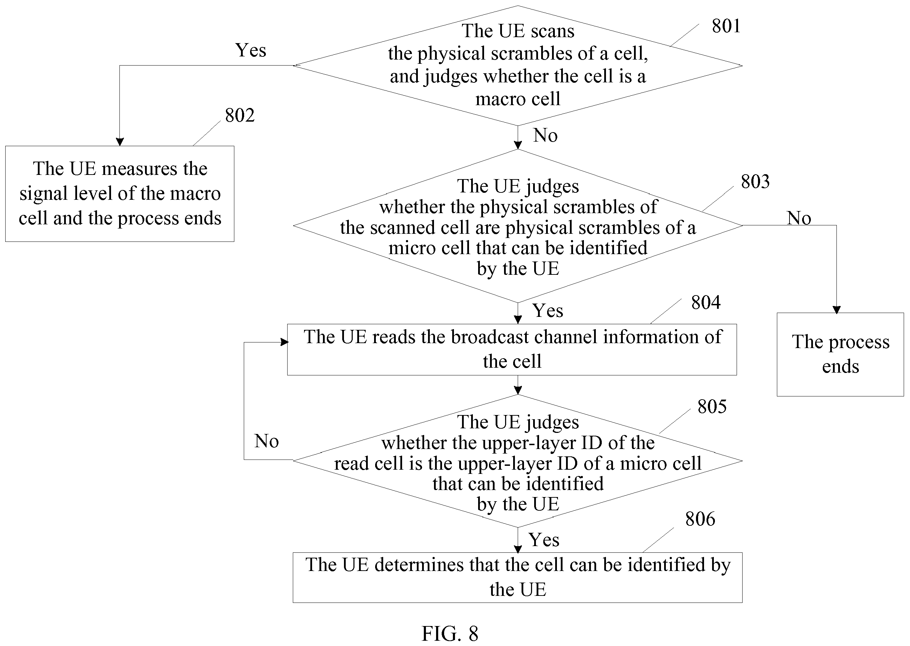

FIG. 8 is a flowchart of a method for reading control channels in an eighth embodiment of the present invention. Prior to this method, special physical scrambles of a macro cell are pre-configured or a list of physical scrambles of a micro cell that can be identified by the UE is pre-configured. In this embodiment of the present invention, the UE judges whether scanned physical scrambles are the special physical scrambles of the macro cell or the physical scrambles of a micro cell that can be identified by the UE; if scanned physical scrambles are the special physical scrambles of the macro cell or the physical scrambles of a micro cell that can be identified by the UE, the UE reads control channels corresponding to the cell. Thus, the number of control channels read by the UE is limited. The method includes:
Step 801: The UE scans physical scrambles of a cell, and judges whether the cell is a macro cell according to the scanned physical scrambles. If the cell is the macro cell according to the scanned physical scrambles, the process proceeds to step 802; otherwise, the process goes to step 803.

Prior to this step, special physical scrambles are pre-configured to identify the macro cell, so that the macro cell can be uniquely identified by the physical scrambles. For example, the number of macro cells acting as the neighbor cells may be pre-configured as 8, 16, or 32. In this embodiment, supposing the number of macro cells acting as the neighbor cells is pre-configured as 8, eight physical scrambles may be used to identify the macro cell. The network and the UE may make an appointment that eight special physical scrambles are used by the macro cell and other physical scrambles are used by the micro cell. In this step, the UE scans physical scrambles of a cell; the UE determines that the cell is a macro cell if finding that the scanned physical scrambles of the cell are special physical scrambles reserved for the macro cell; otherwise, the UE determines that the cell is a micro cell.

Step 802: The UE measures the signal level of the macro cell. Then, the process ends.

Step 803: The UE judges whether the scanned physical scrambles of the cell are physical scrambles of a micro cell that can be identified by the UE. If the scanned physical scrambles of the cell are physical scrambles of the micro cell that can be identified by the UE, the process proceeds to step 804; otherwise, the process ends.

Prior to this step, the UE pre-configures a cell support list that includes physical scrambles of a micro cell that can be identified by the UE and the upper-layer ID of the micro cell.

In this step, the UE judges whether the scanned physical scrambles of the cell are physical scrambles of a micro cell that can be identified by the UE in the following mode: judging whether the scanned physical scrambles of the cell are physical scrambles in the cell support list.

Step 804: The UE reads broadcast channel information of the cell, where the read information includes the upper-layer ID of the cell.

Step 805: The UE judges whether the read upper-layer ID of the cell is the upper-layer ID of a micro cell that can be identified by the UE. If the read upper-layer ID of the cell is not the upper-layer ID of a micro cell that can be identified by the UE, the process goes back to step 804; otherwise, the process proceeds to step 806.

Because the physical scrambles are reused, the UE judges whether the cell is supported by the UE by judging whether the read upper-layer ID of the cell is the upper-layer ID of a micro cell that can be identified by the UE. The step of judging whether the read upper-layer ID of the cell is the upper-layer ID of a micro cell that can be identified by the UE may include: judging whether the read upper-layer ID of the cell is the upper-layer ID of a micro cell in the cell list.

Step 806: The UE determines that the cell can be identified by the UE, configures the measurement offsets of the cell, and uses the measurement result or reports the measurement result.

The step of configuring the measurement offsets includes: adding the signal level of the cell to the offsets of neighbor cells configured by the current serving cell, and obtaining the measurement offsets of the cell.

In the eighth embodiment of the present invention, the UE judges whether the physical scrambles of a cell are physical scrambles of a cell that can be identified by the UE. The UE reads control channels only when the physical scrambles of the cell are physical scrambles of the cell that can be identified by the UE. Thus, the number of cells read by the UE is limited; the time needed by the UE to read control channels of the cell is reduced; and the mobility processing time of the UE is saved. In addition, the UE reads only control channels of cells that meet the pre-configured read condition, where these cells have high signal levels, so that the decoding error rate is reduced when the UE reads the control channels to obtain the parameters of the cells.

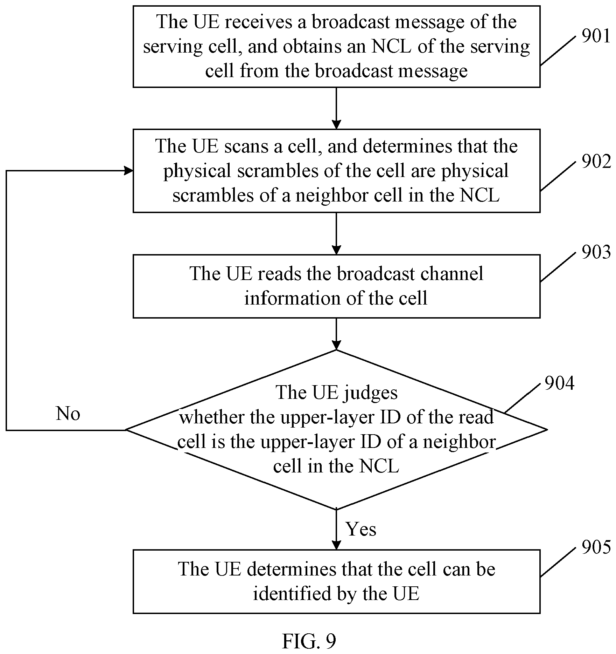

FIG. 9 is a flowchart of a method for identifying cells. In this method, the broadcasted NCL in the cell in the method includes both physical scrambles and IDs of neighbor cells. The method includes:
Step 901: The UE receives a broadcast message of the serving cell, and obtains an NCL of the serving cell from the broadcast message, where the NCL includes physical scrambles and upper-layer IDs of the neighbor cells.
Step 902: The UE scans a cell, and determines that the physical scrambles of the cell are physical scrambles of neighbor cells in the NCL.
Step 903: The UE measures the signal level of the cell, and reads the broadcast channel information of the cell, where the read information includes the upper-layer ID of the cell.
Step 904: The UE judges whether the read upper-layer ID of the cell is the upper-layer ID of a neighbor cell in the NCL. If the read upper-layer ID of the cell is not the upper-layer ID of a neighbor cell in the NCL, the process goes back to step 902; otherwise, the process proceeds to step 905.
Step 905: The UE determines that the cell can be identified by the UE, configures the measurement offsets of the cell, and uses the measurement result or reports the measurement result.

The step of configuring the measurement offsets includes: adding the signal level of the cell to the offsets of neighbor cells configured by the current serving cell, and obtaining the measurement offset of the cell.

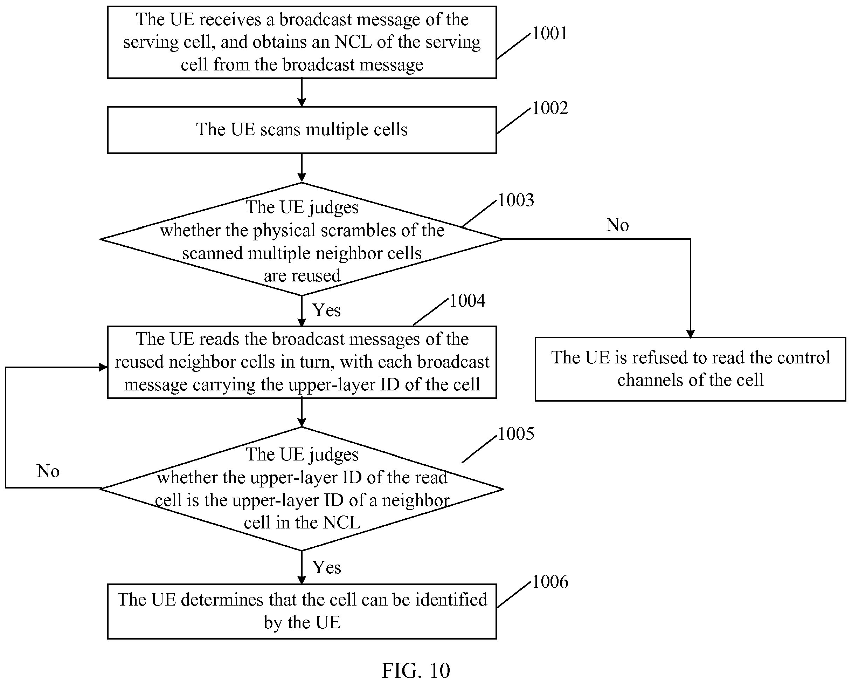

FIG. 10 is a flowchart of a method for identifying cells. In this method, the broadcasted NCL in the cell includes physical scrambles and upper-layer IDs of neighbor cells. The method includes:
Step 1001: The UE receives a broadcast message of the serving cell, and obtains an NCL of the serving cell from the broadcast message, where the NCL includes physical scrambles and upper-layer IDs of the neighbor cells.
Step 1002: The UE scans multiple neighbor cells.
Step 1003: The UE judges whether the physical scrambles of the scanned neighbor cells are reused. If the physical scrambles of the scanned neighbor cells are reused, the process proceeds to step 1004; otherwise, the UE refuses to read the control channels of the cell.

The step of judging whether the physical scrambles of the scanned neighbor cells are reused is to judge whether the cell is uniquely identified by the physical scrambles of the scanned cell. If the physical scrambles of the scanned neighbor cells are not reused, the cell can be uniquely identified by the physical scrambles; otherwise, the cell cannot be uniquely identified by the physical scrambles.

Step 1004: The UE reads broadcast messages of the reused neighbor cells in turn, where the broadcast messages carry the upper-layer ID of the cell.

Step 1005: The UE judges whether the read upper-layer ID of the cell is the upper-layer ID of a neighbor cell in the NCL. If the read upper-layer ID of the cell is not the upper-layer ID of a neighbor cell in the NCL, the process goes back to step 1004; otherwise, the process proceeds to step 1006.

Step 1006: The UE determines that the cell is supported by the UE, configures the measurement offsets of the cell, and uses the measurement result or reports the measurement result.

In a ninth embodiment and a tenth embodiment of the present invention, the UE obtains an NCL from the current serving cell, and judges whether the upper-layer ID of the cell read from the control channels is the upper-layer ID in the NCL; the UE determines that the cell can be identified by the UE only when the judgment result of the UE is positive. Thus, it is guaranteed that the UE can identify a correct cell.

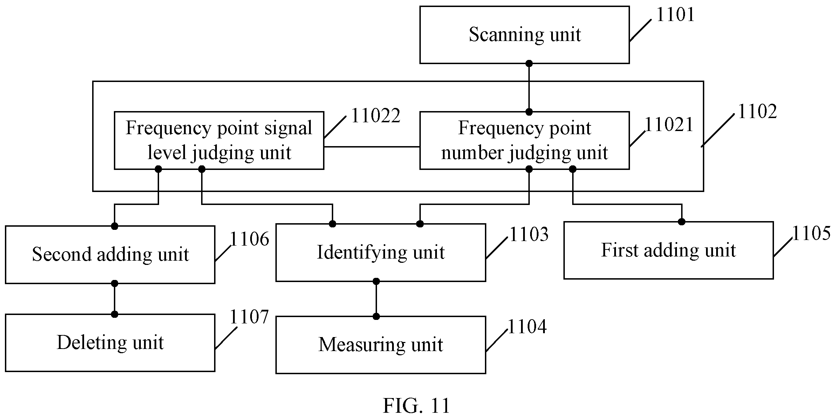

FIG. 11 illustrates a UE in an eleventh embodiment of the present invention. The UE includes:
a scanning unit 1101, adapted to scan a frequency point;
a frequency point judging unit 1102, adapted to judge whether the scanned frequency point meets a pre-configured measurement condition;
an identifying unit 1103, adapted to identify a cell corresponding to the frequency point when the judgment result of the frequency point judging unit 1102 is positive; and
a measuring unit 1104, adapted to measure the signal level of the identified cell.

Specifically, the frequency point judging unit 1102 is adapted to: judge whether the signal strength of the scanned frequency point is greater than the pre-configured signal strength threshold when the signal level of the scanned frequency point is represented by the signal strength; judge whether the signal quality of the scanned frequency point is better than the pre-configured signal quality threshold when the signal level of the scanned frequency point is represented by the signal quality; and judge whether the interference strength of the scanned frequency point is less than the pre-configured interference strength threshold when the signal level of the scanned frequency point is represented by the interference strength.

Specifically, the frequency point judging unit 1102 includes a frequency point number judging unit 11021 and a frequency point signal level judging unit 11022.

The frequency point number judging unit 11021 is adapted to judge whether the scanned frequency point is within the pre-configured number of frequency points.

The frequency point signal level judging unit 11022 is adapted to judge whether the signal level of the scanned frequency point is higher than the lowest signal level of a cell in the cell set with a pre-configured number of cells when the judgment result of the frequency point number judging unit 11021 is positive.

The identifying unit 1103 is adapted to identify a cell corresponding to the frequency point when the judgment result of the frequency point number judging unit 11021 is positive or when the judgment result of the frequency point signal level judging unit 11022 is positive.

The UE further includes:
a first adding unit 1105, adapted to add a cell to the cell set when the judgment result of the frequency point number judging unit 11021 is positive;
a second adding unit 1106, adapted to add the identified cell to the cell set when the judgment result of the frequency point signal level judging unit 11022 is positive; and
a deleting unit 1107, adapted to delete a cell with the poorest signal level from the cell set.

In this embodiment of the present invention, the frequency point judging unit 1102 judges whether the signal level of the scanned frequency point meets the pre-configured measurement condition; the measuring unit 1104 measures the signal level of a cell corresponding to the frequency point only when the signal level of the scanned frequency point meets the pre-configured measurement condition. Thus, the number of cells measured by the UE is limited, which prevents the UE from measuring too many cells.

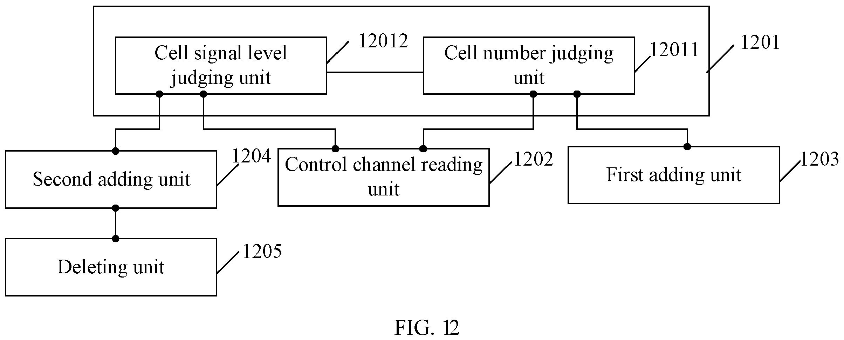

FIG. 12 illustrates a UE in a twelfth embodiment of the present invention. The UE includes:
a cell judging unit 1201, adapted to judge whether a cell meets the pre-configured read condition; and
a control channel reading unit 1202, adapted to read the control channel information of the cell when the judgment result of the cell judging unit 1201 is positive.

Specifically, the cell judging unit 1201 is adapted to: judge whether the signal strength of the cell is greater than the pre-configured signal strength threshold when the signal level of the cell is represented by the signal strength; judge whether the signal quality of the cell is better than the pre-configured signal quality threshold when the signal level of the cell is represented by the signal quality; and judge whether the interference strength of the cell is less than the pre-configured interference strength threshold when the signal level of the cell is represented by the interference strength.

Specifically, the cell judging unit 1201 includes a cell number judging unit 12011 and a cell signal level judging unit 12012.

The cell number judging unit 12011 is adapted to judge whether the cell is within the pre-configured number of cells.

The cell signal level judging unit 12012 is adapted to judge whether the signal level of the cell is higher than the poorest signal level of a cell in the cell set with the pre-configured number of cells when the judgment result of the cell number judging unit 12011 is negative.

The control channel reading unit 1202 is adapted to read control channels of the cell to obtain cell related parameters when the judgment result of the cell number judging unit 12011 is positive or when the judgment result of the cell signal level judging unit 12012 is positive.

The UE further includes:
a first adding unit 1203, adapted to add a cell to the cell set when the judgment result of the cell number judging unit 12011 is positive;
a second adding unit 1204, adapted to add the identified cell to the cell set when the judgment result of the cell signal level judging unit 12012 is positive; and
a deleting unit 1205, adapted to delete a cell with the poorest signal level from the cell set.

In this embodiment, the cell judging unit 1201 judges whether the signal level of the cell is higher than the pre-configured read threshold; the control channel reading unit 1202 reads control channels only when the signal level of the cell is higher than the pre-configured read threshold. Thus, the number of cells read by the UE is limited; the time needed by the UE to read the control channels of the cell is reduced; and the mobility processing time of the UE is saved. In addition, the UE reads only control channels of cells that meet the pre-configured read condition, where these cells have high signal levels, so that the decoding error rate is reduced when the UE reads the control channels to obtain the parameters of the cells.

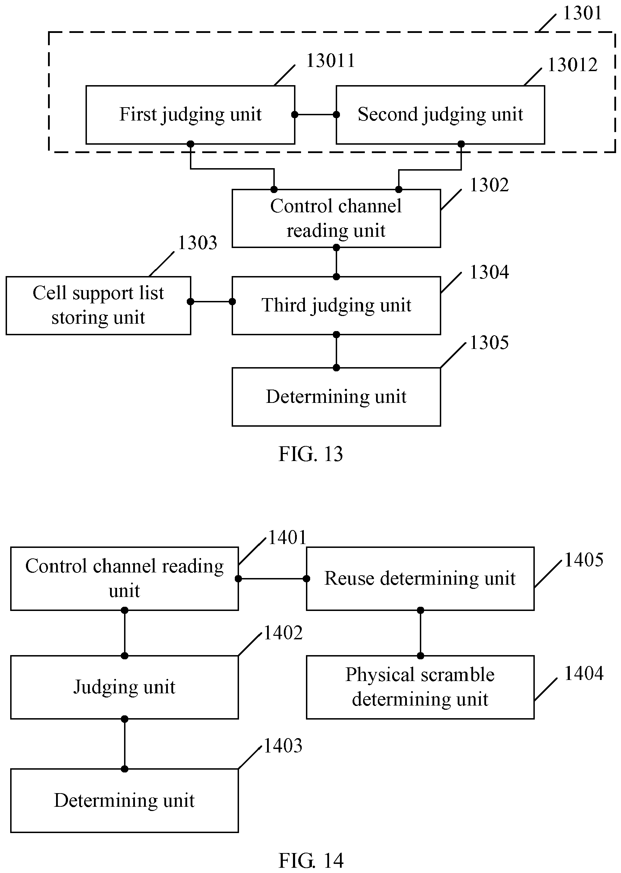

FIG. 13 illustrates a UE in a thirteenth embodiment of the present invention. The UE includes:
a cell judging unit 1301, adapted to judge whether a cell meets the pre-configured read condition; and
a control channel reading unit 1302, adapted to read the control channel information of the cell when the judgment result of the cell judging unit 1301 is positive.

The cell judging unit 1301 includes:
a first judging unit 13011, adapted to judge whether the physical scrambles of the cell are pre-configured physical scrambles of a macro cell; and
a second judging unit 13012, adapted to judge whether the physical scrambles of the cell are physical scrambles of a micro cell that can be identified by the UE when the judgment result of the first judging unit 13011 is negative.

The control channel reading unit 1302 is adapted to read the control channel information of the cell when the judgment result of the first judging unit 13011 is positive or when the judgment result of the second judging unit 13012 is positive.

The UE further includes:
a cell support list storing unit 1303, adapted to store a cell support list that includes physical scrambles and the upper-layer ID of a micro cell that can be identified by the UE;
a third judging unit 1304, adapted to judge whether the upper-layer ID in the read control channel information is the upper-layer ID of a micro cell that can be identified by the UE; and
a determining unit 1305, adapted to determine that the cell can be identified by the UE when the judgment result of the third judging unit 1304 is positive.

In this embodiment of the present invention, the cell judging unit 1301 judges whether the physical scrambles of a cell are physical scrambles of a cell that can be identified by the UE; the control channel reading unit 1302 reads the control channel information of the cell only when the judgment result of the cell judging unit 1301 is positive. Thus, the number of cells read by the UE is limited; the time needed by the UE to read the control channels of the cell is reduced; and the mobility processing time of the UE is saved. In addition, the UE reads only the control channels of cells that meet the pre-configured read condition, where these cells have high signal levels, so that the decoding error rate is reduced when the UE reads the control channels to obtain parameters of the cells.

FIG. 14 illustrates a UE in a fourteenth embodiment of the present invention. The UE includes:
a control channel reading unit 1401, adapted to read control channel information of a cell, where the read information includes the upper-layer ID of the cell;
a judging unit 1402, adapted to judge whether the read upper-layer ID of the cell is the upper-layer ID in an NCL, which is obtained from the serving cell of the UE; and
a determining unit 1403, adapted to determine that the cell can be identified by the UE when the judgment result of the judging unit 1402 is positive.

The UE further includes:
a physical scramble determining unit 1404, adapted to: scan a cell, and determine that the physical scrambles of the scanned cell are physical scrambles in the NCL.

The control channel reading unit 1401 reads the control channel information of the cell after the physical scramble determining unit 1404 determines that the physical scrambles of the scanned cell are physical scrambles in the NCL.

When more than two cells are scanned, the UE further includes:
a reuse determining unit 1405, adapted to judge whether the cell is uniquely identified by the physical scrambles of the scanned cell after the physical scramble determining unit 1404 determines that the physical scrambles of the scanned cell are physical scrambles in the NCL.

The control channel reading unit 1401 reads control channel information of the cell when the physical scramble determining unit 1404 determines that the physical scrambles of the scanned cell are physical scrambles in the NCL and when the reuse determining unit determines that the cell cannot be uniquely identified by the physical scrambles of the scanned cell.

In this embodiment of the present invention, the judging unit 1402 judges whether the upper-layer ID of the cell read from the control channels is the upper-layer ID in the NCL; the determining unit 1403 determines that the cell can be identified by the UE when the judgment result of the judging unit 1402 is positive. Thus, it is guaranteed that the UE can identify a correct cell.

It is understandable to those skilled in the art that all or part of the steps of the foregoing embodiments may be implemented by hardware instructed by a program. The program may be stored in a computer-readable storage medium. When being executed, the program performs one or any combination of the steps of the foregoing embodiments.

In addition, each function unit in embodiments of the present invention may be integrated into a processing module, or exists physically, or two or more units are integrated into a module. The integrated module may be implemented in the form of hardware or software function unit. If the integrated module is implemented in the form of software function unit and is sold or used as an independent product, the integrated module may also be stored in a computer readable storage medium.

The storage medium may be a read-only memory (ROM), a magnetic disk or a compact disk (CD).

Detailed above are a method and UE for measuring cells and reading control channels. It is apparent that those skilled in the art can make various modifications and variations to the embodiments and the application scope of the invention without departing from the principle and scope of the invention. Thus, the specifications shall not be construed as a limitation to the invention.

## Claims

1. A method for reading broadcast channels, comprising:
scanning (801) a physical scramble of a cell, and determining (801) whether the cell is a macro cell according to the scanned physical scramble; when no, judging (803) whether the scanned physical scramble of the cell is a physical scramble in a pre-configured cell support list, wherein the pre-configured cell support list comprises physical scrambles of a micro cell that can be identified by a UE and an upper-layer ID of the micro cell that can be identified by the UE; when yes,
reading (804) broadcast channel information of the cell;
judging whether an upper-layer ID in the read broadcast channel information is an upper-layer ID in the pre-configured cell support list; when yes,
determining the cell is a micro cell that can be identified by the UE.

2. The method according to claim 1, wherein
ending (803) the process if the scanned physical scramble of the cell is not a physical scramble in the pre-configured cell support list.

3. A UE, comprising:
a first processing module, adapted to scan a physical scramble of a cell and determine whether the cell is a macro cell according to the scanned physical scramble;
a second processing module, adapted to judge whether the scanned physical scramble of the cell is a physical scramble in a pre-configured cell support list when the cell is not a macro cell, wherein the pre-configured cell support list comprises physical scrambles of a micro cell that can be identified by the UE and an upper-layer ID of the micro cell that can be identified by the UE;
a third processing module, adapted to read broadcast channel information of the cell, when the scanned physical scramble of the cell is a physical scramble in the pre-configured cell support list;
a fourth processing module, adapted to judge whether an upper-layer ID in the read broadcast channel information is an upper-layer ID in the pre-configured cell support list; and,
a fifth processing module, adapted to determine the cell is a micro cell that can be identified by the UE when the upper-layer ID in the read broadcast channel information is an upper-layer ID in the pre-configured cell support list.

4. The UE according to claim 3, wherein the first processing module further adapted to end the process if the scanned physical scramble of the cell is not a physical scramble in the pre-configured cell support list.

5. A system for reading broadcast channels, comprising:
a NodeB, configured to broadcast public information to UEs;
a UE according to claim 3 or 4.

6. A computer program product, **characterized by** comprising computer program code, which, when executed by a computer unit, will cause the computer unit to perform the steps of the method according to claim 1 or 2.

## Patentansprüche

1. Verfahren zum Lesen von Rundsendekanälen, das Folgendes umfasst:
Abtasten (801) einer physikalischen Verwürfelung einer Zelle und Bestimmen (801), ob die Zelle eine Makrozelle ist, gemäß der abgetasteten physikalischen Verwürfelung; wenn nein, Beurteilen (803), ob die abgetastete physikalische Verwürfelung der Zelle eine physikalische Verwürfelung in einer vorkonfigurierten Zellenunterstützungsliste ist, wobei die vorkonfigurierte Zellenunterstützungsliste physikalische Verwürfelungen einer Mikrozelle, die durch ein UE identifiziert werden kann, und eine ID der höheren Schicht der Mikrozelle, die durch das UE identifiziert werden kann, umfasst; wenn ja,
Lesen (804) der Rundsendekanalinformationen der Zelle;
Beurteilen, ob eine ID der höheren Schicht in den gelesenen Rundsendekanalinformationen eine ID der höheren Schicht in der vorkonfigurierten Zellenunterstützungsliste ist; wenn ja,
Bestimmen, dass die Zelle eine Mikrozelle ist, die durch das UE identifiziert werden kann.

2. Verfahren nach Anspruch 1, wobei
Beenden (803) des Prozesses, falls die abgetastete physikalische Verwürfelung der Zelle nicht eine physikalische Verwürfelung in der vorkonfigurierten Zellenunterstützungsliste ist.

3. UE, das Folgendes umfasst:
ein erstes Verarbeitungsmodul, das ausgelegt ist, eine physikalische Verwürfelung einer Zelle abzutasten und zu bestimmen, ob die Zelle eine Makrozelle ist, gemäß der abgetasteten physikalischen Verwürfelung;
ein zweites Verarbeitungsmodul, das ausgelegt ist zu beurteilen, ob die abgetastete physikalische Verwürfelung der Zelle eine physikalische Verwürfelung in einer vorkonfigurierten Zellenunterstützungsliste ist, wenn die Zelle keine Makrozelle ist, wobei die vorkonfigurierte Zellenunterstützungsliste physikalische Verwürfelungen einer Mikrozelle, die durch das UE identifiziert werden kann, und eine ID der höheren Schicht der Mikrozelle, die durch das UE identifiziert werden kann, umfasst;
ein drittes Verarbeitungsmodul, das ausgelegt ist, Rundsendekanalinformationen der Zelle zu lesen, wenn die abgetastete physikalische Verwürfelung der Zelle eine physikalische Verwürfelung in der vorkonfigurierten Zellenunterstützungsliste ist;
ein viertes Verarbeitungsmodul, das ausgelegt ist zu beurteilen, ob eine ID der höheren Schicht in den gelesenen Rundsendekanalinformationen eine ID der höheren Schicht in der vorkonfigurierten Zellenunterstützungsliste ist; und
ein fünftes Verarbeitungsmodul, das ausgelegt ist zu bestimmen, dass die Zelle eine Mikrozelle ist, die durch das UE identifiziert werden kann, wenn die ID der höheren Schicht in den gelesenen Rundsendekanalinformationen eine ID der höheren Schicht in der vorkonfigurierten Zellenunterstützungsliste ist.

4. UE nach Anspruch 3, wobei das erste Verarbeitungsmodul ferner ausgelegt, den Prozess zu beenden, falls die abgetastete physikalische Verwürfelung der Zelle nicht eine physikalische Verwürfelung in der vorkonfigurierten Zellenunterstützungsliste ist.

5. System zum Lesen von Rundsendekanälen, das Folgendes umfasst:
einen NodeB, der konfiguriert ist, öffentliche Informationen zu UEs rundzusenden;
ein UE nach Anspruch 3 oder 4.

6. Computerprogrammprodukt, **dadurch gekennzeichnet, dass** es Computerprogrammcode umfasst, der dann, wenn er durch eine Computereinheit ausgeführt wird, bewirkt, dass die Computereinheit die Schritte des Verfahrens nach Anspruch 1 oder 2 ausführt.

## Revendications

1. Procédé permettant de lire des canaux de diffusion, comprenant les étapes suivantes :
balayer (801) un brouillage physique d'une cellule, et déterminer (801) si la cellule est une macro cellule selon le brouillage physique balayé ; si tel n'est pas le cas, juger (803) si le brouillage physique balayé de la cellule est un brouillage physique dans une liste de prise en charge de cellules préconfigurées, la liste de prise en charge de cellules préconfigurées comportant des brouillages physiques d'une micro cellule qui peut être identifiée par un UE et un ID de couche supérieure de la micro cellule qui peut être identifiée par l'UE ; si tel est le cas, lire (804) des informations de canal de diffusion de la cellule ;
juger si un ID de couche supérieure dans les informations de canal de diffusion lues est un ID de couche supérieure dans la liste de prise en charge de cellules préconfigurées ; si tel est le cas,
déterminer que la cellule est une micro cellule qui peut être identifiée par l'UE.

2. Procédé selon la revendication 1, dans lequel :
terminer (803) le processus si le brouillage physique balayé de la cellule n'est pas un brouillage physique dans la liste de prise en charge de cellules préconfigurées.

3. UE, comprenant :
un premier module de traitement, conçu pour balayer un brouillage physique d'une cellule et déterminer si la cellule est une macro cellule selon le brouillage physique balayé ;
un deuxième module de traitement, conçu pour juger si le brouillage physique balayé de la cellule est un brouillage physique dans une liste de prise en charge de cellules préconfigurées lorsque la cellule n'est pas une macro cellule, la liste de prise en charge de cellules préconfigurées comportant des brouillages physiques d'une micro cellule qui peut être identifiée par l'UE et un ID de couche supérieure de la micro cellule qui peut être identifiée par l'UE ;
un troisième module de traitement, conçu pour lire des informations de canal de diffusion de la cellule, lorsque le brouillage physique balayé de la cellule est un brouillage physique dans la liste de prise en charge de cellules préconfigurées ;
un quatrième module de traitement, conçu pour juger si un ID de couche supérieure dans les informations de canal de diffusion lues est un ID de couche supérieure dans la liste de prise en charge de cellules préconfigurées ; et,
un cinquième module de traitement, conçu pour déterminer que la cellule est une micro cellule qui peut être identifiée par l'UE lorsque l'ID de couche supérieure dans les informations de canal de diffusion lues est un ID de couche supérieure dans la liste de prise en charge de cellules préconfigurées.

4. UE selon la revendication 3, dans lequel le premier module de traitement en outre conçu pour terminer le processus si le brouillage physique balayé de la cellule n'est pas un brouillage physique dans la liste de prise en charge de cellules préconfigurées.

5. Système permettant de lire des canaux de diffusion, comprenant :
un NoeudB, configuré pour transmettre des informations publiques à des UE ;
un UE selon la revendication 3 ou 4.

6. Produit programme d'ordinateur, **caractérisé en ce qu'**il comprend un code de programme informatique qui, lorsqu'il est exécuté par une unité d'ordinateur, amène l'unité d'ordinateur à mettre en oeuvre les étapes du procédé selon la revendication 1 ou 2.
